# EUROPEAN PATENT APPLICATION

(11) **EP 1 138 629 A2**
(43) Date of publication of application: **04.10.2001**
(21) Application number: 01302834.5
(22) Date of filing: 27.03.2001
(51) Int. Cl.: B81B 1/00

(54) **Microchip for aqueous distribution and method of aqueous distribution using the same**

(30) Priority: 28.03.2000 JP 2000089078
(71) Applicant: Riken, Wako-shi, Saitama 351-0198 (JP)
(72) Inventor: Seki, Minoru, Tokyo 155-031 (JP); Kakigi, Yasuhiro, Tokyo 157-0072 (JP); Hong, Jong Wook, Tokyo 112-0012 (JP); Fujii, Teruo, Tokyo 153-0051 (JP); Endo, Isao, Kokubunnji-shi, Tokyo 185-0011 (JP)
(74) Representative: Frost, Alex John

(57) **Abstract**

In order to reduce a treating time for distributing micro-substances, for example, particles, molecules and the 1 ike such as cells, organelles, proteins, and nucleic acids, there is provided a microchip for aqueous distribution comprising a micro channel having a predetermined shape, which is defined on a flat plate substrate; and a plurality of branched channels, each of which has a predetermined shape and is defined on the substrate, besides these branched channels are linked to only either end of the micro channel.

## Description

### Background of the Invention

### Field of The Invention

The present invention relates to a microchip for aqueous distribution and a method of aqueous distribution using such microchip, and more particularly to a microchip for aqueous distribution used suitably in distributing micro-substances, for example, particles, molecules and the like such as cells, organelles, proteins, and nucleic acids as well as a method of aqueous distribution using such microchip.

It is herein to be noted that the term "micro-substances, for example, particles, molecules and the like such as cells, organelles, proteins, and nucleic acids" is optionally referred generically to as "micro-substances". A specific example of the micro-substances includes microorganisms such as Escherichia coli, and yeast; a variety of cultivated cells of plants and animals; organelles such as mitochondrion, and chloroplast; proteins such as albumin, insulin; and nucleic ac ids such as DNA, and RNA.

### Description of The Related Art

In general, a technology for distributing micro-substances, for example, particles, molecules and the 1 ike such as cells, organelles, proteins, and nucleic acids has been recognized as an important technique in not only fundamental research, but also in a field of medical diagnosis and the like.

Furthermore, application of such technology for distributing micro-substances is greatly expected in a field wherein a technique for selecting cells to be cultured for analysis of environment or production of materials is used.

Meanwhile, as a conventional technique for distributing micro-substances, for example, an aqueous two-phase distribut ion method has been known.

Aqueous two-phase distribution method is a technique including two steps wherein an aqueous two-phase system consisting of, for example, an aqueous solution of polyethylene glycol (PEG) and an aqueous solution of dextran are prepared, these two phases of aqueous solutions are blended with each other to transfer substances contained therein, and thereafter both the phases of aqueous solutions are separated into two phases of the top phase and the bottom phase.

In such aqueous two-phase distribution method as described above, the above-described micro-substances such as cells can be distributed into the top phase, the bottom phase, and their phase boundary (interface) dependent upon differences in sizes, surface charges, hydrophilic-hydrophob ic characteristic of the micro-substances, whereby high-volume processing of the micro-substances can be attained under a moderate condition, so that this method is excellent in this respect.

However, a conventional aqueous two-phase distribution method involves such a problem in that a long period of time is required for separating aqueous solutions of two phases having close physical properties, so that the whole processing period of time becomes prolonged.

Moreover, when a conventional aqueous two-phase distribution method is carried out in a multistage manner, the above-described two-stage steps must be performed in every stages, resulting in such a problem in that the multistage manner becomes complicated and difficult.

In addition, since the above-described two-stage steps are required in a conventional aqueous two-phase distribution method, there is such a problem in that operation for its processing becomes complicated, whereby it is difficult to implement such operation for processing in an automated manner.

### Objects and Summary of The Invention

The present invention has been made in view of such problems involved in the prior art as described above, and an object of the invention is to provide a microchip for aqueous distribution by which a processing period of time can be reduced in case of processing distribution of micro-substances, for example, particles, molecules and the like such as cells, organelles, proteins, and nucleic acids as well as to provide a method of aqueous distribution using the microchip thus obtained.

Moreover, another object of the present invention is to provide a microchip for aqueous distribution used suitably for processing distribution of micro-substances, for example, particles, molecules and the like such as cells, organelles, proteins, and nucleic acids in a multistage manner as well as to provide a method of aqueous distribution using the microchip thus obtained.

Furthermore, still another object of the present invention is to provide a microchip for aqueous distribution used suitably for processing distribution of micro-substances, for example, particles, molecules and the like such as cells, organelles, proteins, and nucleic acids in an automated manner as well as to provide a method of aqueous distribution using the microchip thus obtained.

In order to achieve the above-described objects, the present invention has been made in view of such fact that micro-substances are distributed in the vicinity of interfaces of respective phases in an aqueous multi-phase distribution system of an aqueous two-phase system containing aqueous two phases wherein a variety of aqueous solutions are used, or three-, and more-phase systems (hereinafter an expression "an aqueous multi-phase of an aqueous two-phase system containing aqueous two phases wherein a variety of aqueous solutions are used, or three-, and more-phases" is referred optionally to as "an aqueous composite phase", while an expression "an aqueous multi-phase distribution system of an aqueous two-phase system containing aqueous two phases wherein a variety of aqueous solutions are used, or three-, and more-phase systems" is referred optionally to as "an aqueous composite phase distribution system" dependent upon differences in sizes, surface charges, hydrophilic-hydrophobic characteristic of the micro-substances, even if no mixing for aqueous solutions in respective phases is carried out. As a result, a stable a queous composite phase distribution system is constructed inside a micro channel defined on a microchip for aqueous distribution, and when aqueous solutions in the respective phases are transferred respectively inside the micro channel, it becomes possible to distribute continuously micro-substances, for example, particles, molecules and the like such as cells, organelles, proteins, and nucleic acids in an interface having a large area per volume so as to increase an interfacial area per volume of an aqueous solution in respective phases without mixing any aqueous solution in the respective phases.

Under the condition, in the case when aqueous solutions in the respective phases are allowed to flow thereby to transfer the same inside the micro channel, it may be arranged in such that directions in travel of the phases adjacent to each other through their interface come to be the same direction with each other (such flow in travel of the phases adjacent to each other through their interface come to be the same direction with each other is herein referred to as "parallel flow"), that directions in travel of the phases adjacent to each other through their interface come to be the opposite directions to each other (such flow in travel of the phases adjacent to each other through their interface come to be the opposite directions to each other is herein referred to as "counter flow"), and that such parallel flow and counter flow may exist mixedly.

Accordingly, a constitution of the present invention comprises a micro channel having a predetermined shape, which is defined on a flat plate substrate; and a plurality of branched channels, each of which has a predetermined shape and is defined on the substrate, besides these branched channels are linked to only either end of the micro channel.

Furthermore, a constitution of the present invention comprises a micro channel having a predetermined shape, which is defined on a flat plate substrate; a plurality of branched channels, each of which has a predetermined shape and is defined on the substrate, besides these branched channels are linked to either end of the micro channel; and a plurality of branched channels, each of which has a predetermined shape and is defined on the substrate, besides these branched channels are linked to the other end of the micro channel.

In the above-described constitution, the number of the plurality of branched channels linked to either end of the micr o channel may conform to the number of the plurality of branched channels linked to the other end of the micro channel.

In the above-described constitution, the number of the plurality of branched channels linked to either end of the micr o channel may differ from the number of the plurality of branched channels linked to the other end of the micro channel.

Moreover, the above-described constitution comprises further, a flat surface plate disposed on the top of the substrate; and the micro channel as well as the plurality of branched channels, which are defined on the top of the substrate being sealed with the surface plate.

Still further, a constitution of the invention comprises the steps of supplying an aqueous solution in each phase, which is phase-separated to each of the branched channels; and distr ibuting micro-substances incorporated in the aqueous solution into each phase while transferring the aqueous solution in a phase-separated state inside the micro channel.

Moreover, in the above-described constitution of the present invention, transferring directions of phases adjacent to each other through their interface are in a parallel flow where the directions are the same with each other in case of transferring the aqueous solution in a phase-separated state inside the micro channel.

Yet further, in the above-described constitution of the present invention, transferring directions of phases adjacent to each other through their interface are in a counter flow where the directions are reverse of one another in case of transferring the aqueous solution in a phase-separated state inside the micro channel.

Still further, in the above-described constitution of the present invention, a parallel flow where directions of phases adjacent to each other through their interface are the same with each other, and a counter flow where transferring directions of phases adjacent to each other through their interface are reverse of one another exist mixedly in case of transferring the aqueous solution in a phase-separated state inside the micro channel.

### Brief Description of The Drawings

The present invention will become more fully understood from the detailed description given hereinafter and the accompanying drawings which are given by way of illustration only, and thus are not limitative of the present invention, and wherein:
FIGS. 1a and 1b are views each illustrating a first preferred embodiment of a microchip for aqueous distribution according to the present invention wherein FIG. 1a is a fragmentary view taken in the direction of the arrow A in FIG. 1b, and FIG. 1b is a sectional view taken along the line B-B in FIG. 1a;
FIGS. 2a, 2b, 2c, 2d, and 2e are schematic explanatory views each illustrating a manufacturing process of a microchip 10 for aqueous distribution;
FIG. 3 is a conceptual explanatory view for explaining distribution of micro-substances in aqueous distribution;
FIG. 4 is an explanatory view illustrating a second preferred embodiment of a microchip for aqueous distribution according to the present invention and the view, which corresponds to FIG. 1a;
FIG. 5 is a conceptual explanatory view for explaining distribution of micro-substances in aqueous distribution; and
FIG. 6 is an explanatory view illustrating a third preferred embodiment of a microchip for aqueous distribution according to the present invention and the view, which corresponds to FIG. 1a.

### Detailed Description of The Preferred Embodiments

In the following, preferred embodiments of a microchip for aqueous distribution and a method of aqueous distribution using the same according to the present invention will be described in detail by referring to the accompanying drawings.

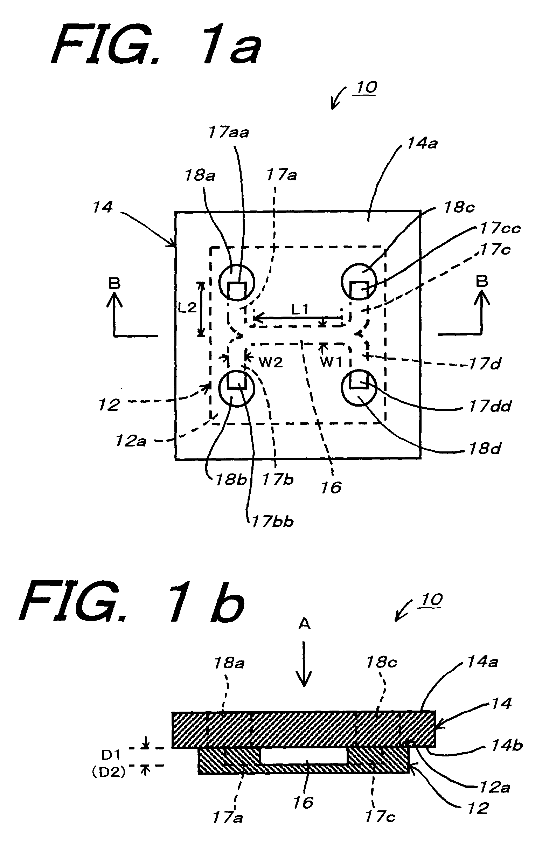

FIGS. 1a and 1b illustrate the first preferred embodiment of a microchip for aqueous distribution according to the present invention wherein FIG. 1a is a fragmentary view taken in the direction of the arrow A in FIG. 1b, and FIG. 1b is a sectional view taken along the line B-B in FIG. 1a.

In these figures, a microchip 10 for aqueous distribution is composed of a flat plate substrate 12 prepared from a high-molecular (polymer) material such as PDMS (polydimethyl siloxane), and a flat surface plate 14 prepared from PMMA (pol ymethyl methacrylate) disposed on a top 12a of the substrate 12.

On the top 12a of the substrate 12 is defined a micro channel 16 configuring a straight-line type flow path having a so-called I-shape.

One of the opposite ends of the micro channel 16 is bifurcated into a first branched channel 17a and a second branched channel 17b, while the other of the opposite ends of the micro channel 16 is also bifurcated into a third branched channel 17c and the fourth branched channel 17d.

The micro channel 16, the first branched channel 17a, the second branched channel 17b, the third branched channel 17c, and the fourth branched channel 17d, which have been defined on the top 12a of the substrate 12 as described above are sealed with the surface plate 14.

On the surface plate 14 are bored four ports, i.e., a first port 18a, a second port 18b, a third port 18c, and a fourth port 18d for introducing thereinto or discharging therefrom a variety of aqueous solutions for aqueous distribution, respectively, which function as openings and formed in such a manner that the openings penetrate the surface plate 14a from the top 14a to the bottom 14b thereof.

In these circumstances, the first port 18a, the second port 18b, the third port 18c, and the fourth port 18d as well as the first branched channel 17a, the second branched channel 17b, the third branched channel 17c, and the fourth branched channel 17d are disposed and defined, respectively, in such that an extreme end 17aa of the first branched channel 17a is 1 ocated at a part of the first port 18a, an extreme end 17bb of the second branched channel 17b is located at a part of the second port 18b, an extreme end 17cc of the third branched channel 17c is located at a part of the third port 18c, and an extreme end 17dd of the fourth branched channel 17d is located at a part of the fourth port 18d, whereby the first port 18a is communicated with the extreme end 17aa of the first branched channel 17a, the second port 18b is communicated with the extre me end 17bb of the second branched channel 17b, the third port 18c is communicated with the extreme end 17cc of the third branched channel 17c, the fourth port 18d is communicated with the extreme end 17dd of the fourth branched channel 17d, respectively.

Furthermore, a length L1 of the micro channel 16 is, for example, defined to be 10 mm, a width W1 of the micro channel 16 is, for example, defined to be 400 im, and a depth D1 of the micro channel 16 is, for example, defined to be 180 im.

On one hand, each length L2 of the first branched channel 17a, the second branched channel 17b, the third branched channel 17c, and the fourth branched channel 17d is, for example, defined to be 5 mm, each width W2 of the first branched channel 17a, the second branched channel 17b, the third branched channel 17c, and the fourth branched channel 17d is, for example, defined to be 200 im, and each depth D2 of the first branched channel 17a, the second branched channel 17b, the third branched channel 17c, and the fourth branched channel 17d is, for example, defined to be 180 im, respectively.

However, it is to be noted that the length L1 of the micro channel 16 as well as each of the lengths L2 of the first branched channel 17a, the second branched channel 17b, the third branched channel 17c, and the fourth branched channel 17d are not specifically restricted, but an arbitrary length may be selected as occasion demands, for instance, it is possible t o define these lengths L1 and L2 to be an optional value extending from 1 mm to 1000 mm, respectively.

Furthermore, the width Wl of the micro channel 16 as well as each of the widths W2 of the first branched channel 17a, the second branched channel 17b, the third branched channel 17c, and the fourth branched channel 17d are not specifically restr icted, but an arbitrary width may be selected as occasion arises, for instance, it is possible to define these widths to be an optional value extending from 1 im to 1000 im, respectively.

Moreover, the depth D1 of the micro channel 16 as well as each of the depths D2 of the first branched channel 17a, the second branched channel 17b, the third branched channel 17c, and the fourth branched channel 17d are not specifically restr icted, but an arbitrary depth may be selected according to needs, for instance, it is possible to define these depths to be an optional value extending from 1 im to 5 mm, respectively.

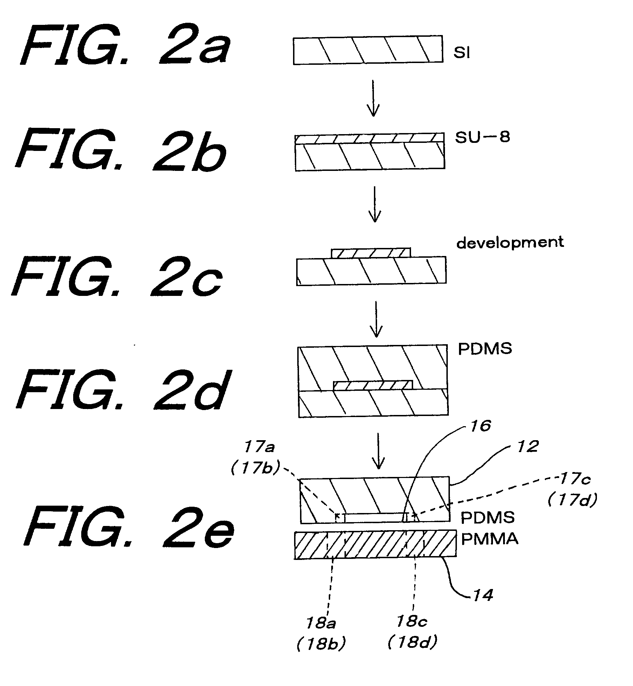

Next, the above-described microchip 10 for aqueous distr ibution may be manufactured in accordance with, for example, a manufacturing process, which will be described herein by referring to FIGS. 2a, 2b, 2c, 2d, and 2e, respectively. Prior to application of the manufacturing process, a layout pattern for forming the micro channel 16, the first branched channel 17a, the second branched channel 17b, the third branched channel 17c, and the fourth branched channel 17d has been printed on a transparent film with high resolution, e.g., 4064 dpi for the sake of utilizing the same as a mask for photolithography.

A process for manufacturing the microchip 10 for aqueous distribution provided with the above-described substrate 12 prepared from PDMS will be described in detail hereinafter.

Outline of a manufacturing process for the microchip 10 for aqueous distribution is illustrated in FIGS. 2a, 2b, 2c, 2d, and 2e, respectively.

First, a silicon (Si) wafer of 20 mm x 20 mm is dried in an oven (FIG. 2a), the silicon wafer thus dried is spin-coated with a negative photoresist SU-8 at 500 rpm for ten seconds and at 1500 rpm for ten seconds, and then the silicon wafer thus coated is lagged for 30 minutes in the oven at 90°C (FIG. 2b).

Meanwhile, as a result of the operation as described above, a structure of the micro channel 16, the first branched channel 17a, the second branched channel 17b, the third branched channel 17c, and the fourth branched channel 17 having a depth of 180 im is fabricated in the first preferred embodiment.

The layout pattern thus printed in a mask-shaped for the microchip 10 for aqueous distribution is transferred to a silicon wafer coated with SU-8 by the use of a mask aligner (for example, "PEM-800; Union Optical Co., Tokyo, Japan" may be used as a mask aligner) in accordance with a photolithographic manner, and the resulting layout pattern is developed by keeping the same in 1-methoxy-2-propyl acetic acid for twenty minutes (FIG. 2c).

The master thus fabricated is washed with isopropyl alcohol, and succeedingly with distilled water.

Next, prior to pouring a PDMS prepolymer, the master was treated with fluorocarbon by the use of RIE (Reactive Ion Etching) system.

The fluorocarbon treatment is useful for removing a PDMS replica after templating.

Thereafter, the PDMS prepolymer and a curing reagent (for example, "Sylgard 184: Dow Corning Co. , MI" may be used as a curing reagent) are blended in a ratio of "10 : 1", the mixture is sufficiently agitated, and then the mixture is vacuum-deaerated for only fifteen minutes to prepare a prepol ymer mixed liquor. The resulting prepolymer mixed liquor is p oured on the master, and the master thus poured is cured at 65°C for one hour, and then at 95°C for fifteen minutes (FIG. 2d).

After the above-described curing, when the PDMS replica is peeled away from the master, a PDMS substrate 12 is obtained. Then, the PMMA surface plate 14 on which have been bored the first port 18a, the second port 18b, the third port 18c, and the fourth port 18d is covered with the PDMS substrate 12 to be mounted thereon, whereby the micro channel 16, the first branched channel 17a, the second branched channel 17b, the third branched channel 17c, and the fourth branched channel 17d are sealed therewith (FIG. 2e)

It is to be noted that such expression "the micro channel 16, the first branched channel 17a, the second branched channel 17b, the third branched channel 17c, and the fourth branched channel 17d are sealed therewith" in the first preferred embod iment does not mean such a condition that the micro channel 16, the first branched channel 17a, the second branched channel 17b, the third branched channel 17c, and the fourth branched channel 17d are sealed hermetically with the PMMA surface plate 14, but they are in such a condition that the first port 18a is communicated with the extreme end 17aa of the first branched channel 17a, the second port 18b is communicated with the extre me end 17bb of the second branched channel 17b, the third port 18c is communicated with the extreme end 17cc of the third branched channel 17c, and the fourth port 18d is communicated with the extreme end 17dd of the fourth branched channel 17d, respectively.

Furthermore, the PDMS substrate 12 attached to the PMMA surface plate 14 by means of RIE system is oxidized with oxygen plasma, whereby the micro channel 16, the first branched channel 17a, the second branched channel 17b, the third branched channel 17c, and the fourth branched channel 17d are oxidized with oxygen plasma, so that it is possible to make each surface of the micro channel 16, the first branched channel 17a, the second branched channel 17b, the third branched channel 17c, and the fourth branched channel 17d to be hydrophilic.

It is to be noted herein that a manner for making each surface of the micro channel 16, the first branched channel 17a, the second branched channel 17b, the third branched channel 17c, and the fourth branched channel 17d to be hydrophilic is not 1 imited to a manner for oxidizing each surface of them with oxygen plasma as described above, but other manners may be appropriately utilized.

In the constitution as described above, a method of aqueous distribution for distributing micro-substances, for example, particles, molecules and the like such as cells, organelles, proteins, and nucleic acids by the use of the above-described micro chip 10 for aqueous distribution will be described.

In order to effect aqueous distribution of micro-substances by the use of the micro chip 10 for aqueous distribution, an aqueous two-phase solution composed of, for example, polyethylene glycol and dextran, which is an aqueous two-phase solution that is adjusted so as to be capable of obtaining a stable aqueous two-phase system and that has been phase-separated must be first prepared. Lithium sulfate or the like may be added to the resulting aqueous solution as occasion demands.

Micro-substances to be distributed are incorporated in both or either of a first phase of a polyethylene glycol rich a queous solution and a second phase of a dextran rich aqueous solution, both the aqueous solutions having been prepared and phase-separated as described above.

Then, the polyethylene glycol rich aqueous solution is supplied into the first branched channel 17a through the first port 18a, and at the same time, the dextran rich aqueous solution is supplied into the second branched channel 17b thr ough the second port 18b. It is to be noted in this case that both supply steps of the polyethylene glycol rich aqueous solution into the first branched channel 17 and the dextran rich aqueous solution into the second branched channel 17b may be started either exactly at the same time, or either of the suppl y steps of the aqueous solutions may be started first, and then the other supply step may be started after lapse of a predetermined time. Moreover, such micro-substances may be introduced in an interface of these two phases in the form of a queous solution or suspension.

As described above, when the polyethylene glycol rich aqueous solution is introduced into the first branched channel 17a and the dextran rich aqueous solution is introduced into the second branched channel 17b, these polyethylene glycol rich a queous solution and dextran rich aqueous solution travel successively into the micro channel 16.

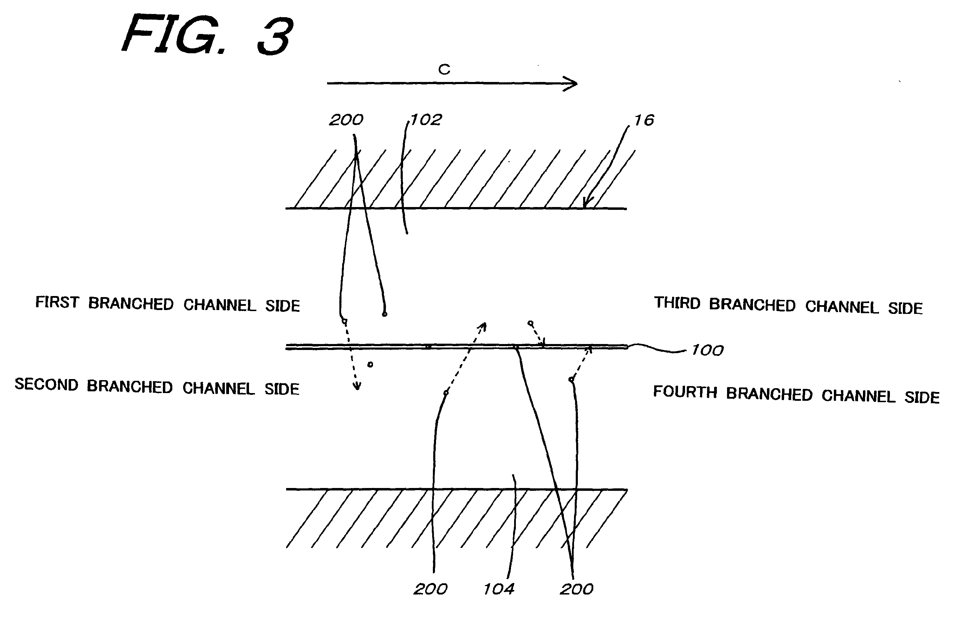

In this case, the polyethylene glycol rich aqueous solution and the dextran rich aqueous solution proceed inside the micro channel 16 in a direction indicated by, for example, a solid line arrow C in a phase-separated condition wherein there are two phases of a polyethylene glycol rich phase 102 and a dextran rich phase 104 separated by an interface 100 as shown in FIG. 3. Namely, the polyethylene glycol rich phase 102 is in a state of parallel flow with respect to the dextran rich phase 104 in the micro channel 16.

In the vicinity of the interface 100, the micro-substances 200, which have been incorporated in both or either of the polyethylene glycol rich aqueous solution and the dextran rich aqueous solution transfer, for instance, from the polyethylene glycol rich phase 102 to the interface 100 or the dextran rich phase 104, otherwise the micro-substances transfer from the dextran rich phase 104 to the interface 100 or the polyethylene glycol rich phase 102 along the directions indicated by broken line arrows shown in FIG. 3 dependent upon differences in sizes, surface charges, hydrophilic-hydrophobic characteristic of the micro-substances, whereby distribution is carried out in response to properties of the micro-substances.

In other words, a stable aqueous plural phase distributing system is formed in the micro channel 16 defined on the micro chip 10 for aqueous distribution, so that when the polyethylene glycol rich phase 102 and the dextran rich phase 104 transfer inside the micro channel 16, an interfacial area per volume of the polyethylene glycol rich phase 102 and the dextran rich phase 104 increases, and as a result, the micro-substances 200 can be continuously distributed in such interface where an area per volume is large without blending the polyethylene glycol rich aqueous solution with the dextran rich aqueous solution.

Then, the polyethylene glycol rich phase 102, which had transferred inside the micro channel 16 passes through the third branched channel 17c and flows out outside the micro chip 10 for aqueous distribution through the third port 18c, while the dextran rich phase 104, which had transferred inside the micro channel 16 passes through the fourth branched channel 17d and flows out outside the micro chip 10 for aqueous distribution through the fourth port 18d.

These polyethylene glycol rich phase 102 drained from the third port 18c and the dextran rich phase 104 drained from the fourth port 18d are used for purposes of appropriate analysis, recovery of cells and the like.

As described above, according to aqueous distribution of the micro-substances 200 by the use of the microchip 10 for aqueous distribution, the micro-substances 200 can be contin uously distributed, so that distribution efficiency is improved, whereby it becomes possible to reduce a treating time for distribution.

Moreover, since the microchip 10 has a simple structure as described above, even if such a distribution system that is constituted by multiplying stages of a plurality of microchips 10 for aqueous distribution is manufactured, upsizing of the whole distribution system is avoided, whereby downsizing and s implification of the distribution system can be attained.

In other words, the microchip 10 for aqueous distribution may be concluded to be suitably used for a multistage treatment for distributing the micro-substances 200.

Furthermore, a treatment for aqueous distribution of the micro-substances 200 wherein the microchip 10 for aqueous distribution is used does not need any operation for complicated treatment, so that it may be concluded that the microchip 10 for aqueous distribution is suitable for automating operation for treatment.

In an aqueous distribution wherein the above described microchip 10 for aqueous distribution is used, the polyethylene glycol rich aqueous solution has been introduced into the first branched channel 17a through the first port 18a, and at the same time, the dextran rich aqueous solution has been introduced into the second branched channel 17b through the second port 18b, thereafter, the polyethylene glycol rich phase 102, which had transferred inside the micro channel 16 has passed through the third branched channel 17c and has been drained to the micr ochip 10 for aqueous distribution through the third port 18c, while the dextran rich phase 10, which had transferred inside the micro channel 16 has passed through the fourth branched channel 17d and has been drained to the microchip 10 for aqueous distribution through the fourth port 18d.

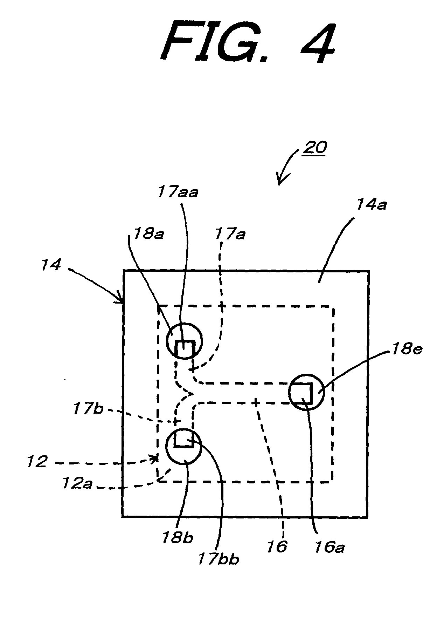

However, when it is required to only observe a situation of distribution for the micro-substances 200 in the micro channel 16, it may be arranged in such that a third branched channel 17c and a fourth branched channel 17d are not defined on a substrate 12, and both the polyethylene glycol rich phase 102 and the dextran rich phase 104, which had transferred inside the micro channel 16 is drained outside a microchip 20 for aqueous distribution through a port 18e (the port 18e communicates with an extreme end 16a of a micro channel 16 located on the side opposite to that where a first branched channel 17a is connected to a second branched channel 17b with an adjacent relation) that is defined on a surface plate 14 in place of a third port 18c and a fourth port 18d without defining a third branched channel 17c and a fourth branched channel 17d on the substrate 12 as in the microchip 20 for aqueous distribution being a second preferred embodiment of a microchip for aqueous distribution according t o the present invention shown in FIG. 4.

In the microchip 20 for aqueous distribution shown in FIG. 4, the same components as or equivalent ones to those of the microchip 10 for aqueous distribution are represented by the same as or equivalent to the reference numerals used in FIG. 1a.

Although aqueous distribution wherein the above-described microchip 10 for aqueous distribution has applied such parallel flow that the polyethylene glycol rich a queous solution is introduced into the first branched channel 17a through the first port 18a, and at the same time, the dextran rich aqueous solution is introduced into the second branched channel 17b through the second port 18b, whereby the polyethylene glycol rich phase 102 transfers in the same direction as that of the dextran rich phase 104 with respect to the interface 100, such counterflow that the polyethylene glycol rich phase 102 transfers in a direction opposite to that of the dextran rich phase 104 with respect to the interface 100 may also be applied to the aqueous distribution.

In the case where counterflow is applied, for instance, the polyethylene glycol rich aqueous solution is introduced into the first branched channel 17a through the first port 18a (located in the upper left part of FIG. 1a), and at the same time, the dextran rich aqueous solution is introduced into the fourth branched channel 17d through the fourth port 18d (located in the lower right part of FIG. 1a).

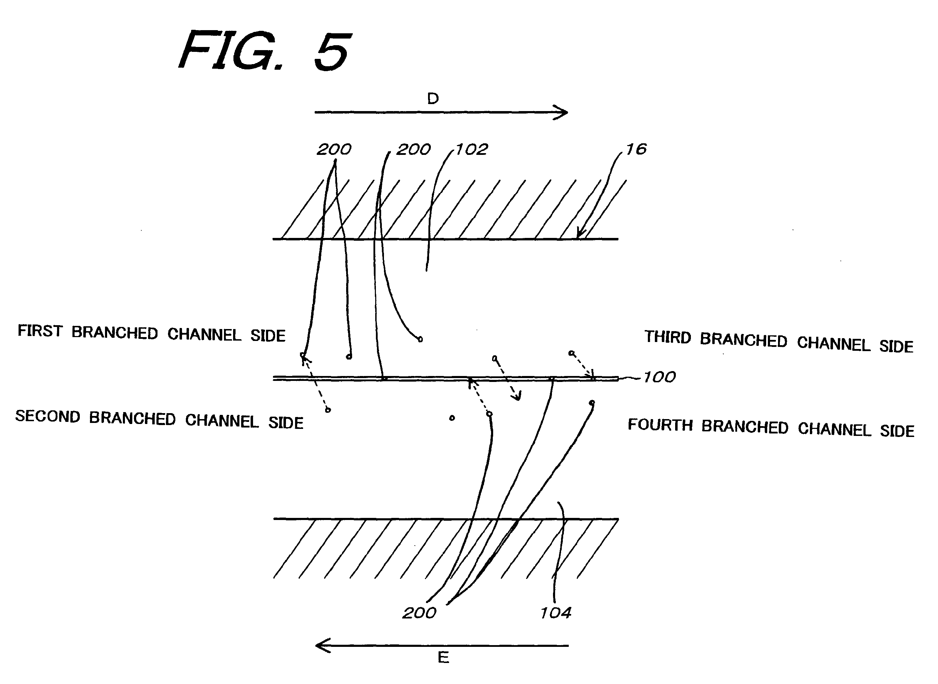

In this case, as shown in FIG. 5, the polyethylene glycol rich aqueous solution introduced into the first branched channel 17a through the first port 18a transfers inside the micro channel 16 in a direction indicated by the arrow D (see FIG. 5) as the polyethylene glycol rich phase 102 with respect to the interface 100 to pass through the third branched channel 17c, and is drained outside the microchip 10 for aqueous distribution through the third port 18c, while the dextran rich aqueous solution introduced into the fourth branched channel 17d through the fourth port 17d transfers inside the micro channel 16 in a direction indicated by the arrow E (see FIG. 5) as the dextran rich phase 104 with respect to the interface 100 to pass through the second branched channel 17b, and is drained outside the microchip 10 for aqueous distribution thr ough the second port 18b.

While the above-described microchip 10 for aqueous distr ibution is suitably used for an aqueous two-phase distribution system, when it is intended to use a microchip for aqueous distribution according to the present invention in an aqueous multi-phase distribution system of aqueous three- or more-phase distribution system, the number of ports or branched channels required for introducing a variety of aqueous solutions into a micro channel may be selected in response to the number of phases questioned.

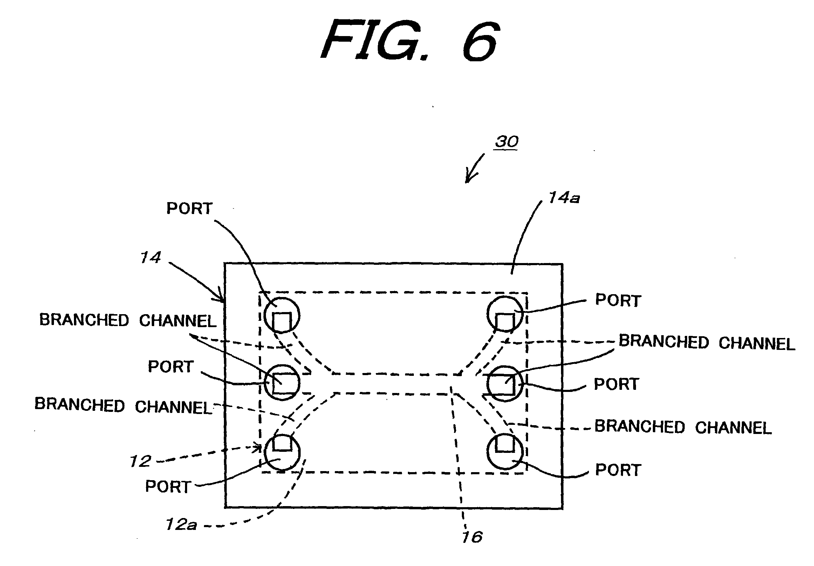

More specifically, when it is intended to use a microchip for aqueous distribution according to the present invention in an aqueous three-phase distribution system, the microchip may be constituted as in a microchip 30 for aqueous distribution being a third preferred embodiment of a microchip for aqueous solution according to the present invention shown in FIG. 6 in such that three each branched channels are defined in a micro channel 16 at both opposite ends thereof, besides ports in response to the three each branched channels are defined.

In these circumstances, a variety of aqueous solutions ma y be appropriately introduced from respective ports in such a manner that adjacent phases are in the form of parallel flow or counter flow.

In addition, it may be arranged in such that parallel flow exists mixedly with counter flow in a single micro channel 16 as a matter of course.

Moreover, the number of ports and branched channels through which a variety of aqueous solutions are introduced into a micro channel 16 is not restricted as described above, for instance, it may be arranged in such that four each of branched channels, which are branched from the micro channel 16 at extreme end portions of the opposite ends thereof are defined, and further four each ports are defined in response to these four each of branched channels in the case where the number of phases for aqueous distribution is four, and in this connection, if the number of phases for aqueous distribution is five, it ma y be arranged in such that five each of branched channels, which are branched from the micro channel 16 at extreme end portions of the opposite ends thereof are defined, and further five each ports are defined in response to these five each of branched channels.

Namely, the number of phases for aqueous distribution corresponds to the number of branched channels defied respectively at extreme end portions of the opposite ends of a micro channel 16 in principle.

While the number of phases for aqueous distribution corresponds fundamentally to that of branched channels to be defined respectively at extreme end portions of the opposite ends of a micro channel 16 as described above, the number of ports and branched channels for introducing a variety of aqueous solutions are not necessarily required to conform to each other at end portions of the opposite ends of the micro channels 16. Accordingly, it may be arranged in such that seven branched channels, which are branched from either end of a micr o channel 16 are defined, and at the same time seven ports are defined in response to the seven branched channels, while three branched channels, which are branched from the other end of the micro channel 16 are defined, and at the same time three ports are defined in response to the three branched channels.

Aqueous solutions used for a method of aqueous distribution wherein a microchip for aqueous distribution according to the present invention is employed are not limited to the polyethylene glycol rich aqueous solution and the dextran rich aqueous solution described in the above preferred embodiments, but a set of aqueous solutions forming a stable multi-phase system of three or more phases may be used in the case where, for example, distribution of multiple phases of two or more phases is implemented.

Furthermore, even if a system is stable in only two phases, it is possible to form a stable flow of three or more phases in a micro channel where influence of gravity becomes relatively small, when two phases of aqueous solutions, which have been separated previously are introduced alternately. Thus, a set of aqueous solutions wherein only two phases become a stable systemmay be used.

For instance, materials enumerated hereinafter are known relating to a specific composition for a water-soluble polymer distribution system.
1. Aqueous two-phase distribution system prepared from a combination of two types of polymers and water (There is a case where salts are added thereto.)
   (1-1) Types of polymer: polyethylene glycol, dextran, polypropylene glycol, polyvinyl alcohol, polyvinyl pyrrolidone, methyl cellulose, methoxypolyethylene glycol, ethylhydroxyethyl cellulose, hydroxypropyl dextran, Ficol, dextran sulfate, carboxymethyl dextran, carboxymethyl cellulose, diethylaminoethyl dextran (DEAE dextran), levan, soluble starch, gelatin, agar-agar, gum arabic, hemoglobin, or water-soluble proteins such as egg albumin, and serum albumin, nucleic acids, and the derivatives of these polymers or the like.
   (1-2) Salts added: sodium chloride (NaCl), potassium chloride (KCl), cesium chloride (CsCl), rubidium chloride (RbCl), lithium chloride (LiCl), lithium sulfate (Li₂SO₄) and the like.
2. Aqueous two-phase distribution system prepared from a combination of one type of polymer, a low-molecular material, and water
   (2-1) Type of polymers: one of the polymers described in the paragraph (1-1).
   (2-2) Low-molecular materials: potassium phosphate, sod ium chloride (NaCl), glucose, propyl alcohol, glycerol, butyl cellosolve, butyl-â-hydroxyethyl ether and the like.
3. An aqueous multi-phase distribution system prepared from two or more types of polymers and water (There is a case where salts or low-molecular materials are added thereto.)
   (3-1) Types of polymers: Some of the polymers described in the paragraph (1-1).
   (3-2) Types of salts added: Any of the salts added, which are described in the paragraph (1-2).
   (3-3) Types of low-molecular materials: Any of the low-molecular materials described in the paragraph (2-2).

It is to be noted that the above-described preferred embodiments may be modified as described in the following paragraphs (1) through (7).
(1) While a surface plate 14 has been disposed on any of the substrates 12 in the microchips 10, 20, and 30 for aqueous distribution in the above-described preferred embodiments, the invention is not limited thereto, but no surface plate 14 may be disposed on any of the substrates 12 as a matter of course.
(2) Although PDMS has been used as a material of the substrate 12, and PMMA has been used as a material of the surface plate 14 in the above-described preferred embodiments, the invention is not limited thereto as a matter of course, but a variety of high-molecular materials, glass, silicon and the like may be employed for the substrate 12 and the surface plate 14 as their materials.
(3) While the microchips 10, 20, and 30 for aqueous distribution have been manufactured in accordance with the man ufacturing process described by referring to FIGS. 2a, 2b, 2c, 2d, and 2e in the above-described preferred embodiments, the present invention is not restricted thereto as a matter of course, but the microchips 10, 20, and 30 for aqueous distribut ion may be manufactured in accordance with an appropriate manufacturing process dependent upon types of materials of the substrate 12 and the surface plate 14.
(4) Although the micro channel 16 has been defined in an I-shaped straight line configuration in the above-described preferred embodiments, the invention is not limited thereto as a matter of course, but the micro channel 16 may be defined in a polygonal line, which is obtained by combining I-shaped stra ight line configurations with each other, a curved line configuration obtained by combining appropriately curved lines each having an appropriate curvature such as C- or S-shaped line, and the other configurations such as the one obtained by combining a straight line shape, a polygonal line shape, and a curved line shape, respectively.
(5) In the above-described preferred embodiments, although a detailed description as to a configuration of each branched channel has been omitted, it is preferred that each branched channel is defined into a curved line shape having an appropriate curvature, and it is arranged to be linked smoothly to a micro channel 16 as shown in FIGS. 1, 4, and 6. H owever, a shape of each branched channel is not limited to a curved line configuration, but it may be an I-shaped straight line configuration, a polygonal line configuration obtained by combining I-shaped straight line shapes, or an appropriate configuration obtained by combining suitably straight line configurations, polygonal line configurations, and curved line configurations, and further when a branched channel thus obtained is linked to a micro channel 16, it may be a polygonal line configuration having a square section at its link point.
(6) In the above-described embodiments, a length, a width, and a depth of a micro channel 16 and each branched channel have been selected optionally, but it is preferred that these factors are adjusted dependent upon the number of branched channels to be linked to the micro channel 16. More specifically, it is preferred that a width of each branched channel is narrowed in the case where the number of branched channels that are to be linked to the ends of the micro channel 16 are increased.
(7) The above-described preferred embodiments as well as the modifications described in the above paragraphs (1) through (5) may be combined optionally with each other.

Since the present invention has been constituted as descr ibed above, there is such an excellent advantage that a treating time for distributing micro-substances, for example, particles, molecules and the like such as cells, organelles, proteins, and nucleic acids can be reduced.

Furthermore, since the present invention has been constituted as described above, there is such an excellent advantage that the invention is suitable for making a treatment for distributing micro-substances, for example, particles, molecules and the like such as cells, organelles, proteins, and nucleic acids to be performed in a multiple stage system.

Moreover, since the present invention has been constituted as described above, there is such an excellent advantage that the invention is suitable for making a treatment for distributing micro-substances, for example, particles, molecules and the like such as cells, organelles, proteins, and nucleic acids to be performed in an automated system.

It will be appreciated by those of ordinary skill in the art that the present invention can be embodied in other specific forms without departing from the spirit or essential characteristics thereof.

The presently disclosed embodiments are therefore considered in all respects to be illustrative and not restrictive. The scope of the invention is indicated by the appended claims rather than the foregoing description, and all changes that come within the meaning and range of equivalents thereof are intended to be embraced therein.

The entire disclosure of Japanese Patent Application No. 2000-89078 filed on March 28, 2000 including specification, claims, drawings and summary are incorporated herein by reference in its entirety.

## Claims

1. A microchip for aqueous distribution comprising:
a micro channel having a predetermined shape, which is defined on a flat plate substrate; and
a plurality of branched channels, each of which has a predetermined shape and is defined on said substrate, besides these branched channels are linked to only either end of said micro channel.

2. A microchip for aqueous distribution comprising:
a micro channel having a predetermined shape, which is defined on a flat plate substrate;
a plurality of branched channels, each of which has a predetermined shape and is defined on said substrate, besides these branched channels are linked to either end of said micro channel; and
a plurality of branched channels, each of which has a predetermined shape and is defined on said substrate, besides these branched channels are linked to the other end of said micro channel.

3. A microchip for aqueous distribution as claimed in claim 2 wherein the number of the plurality of branched channels linked to either end of said micro channel conforms to the number of the plurality of branched channels linked to the other end of said micro channel.

4. A microchip for aqueous distribution as claimed in claim 2 wherein the number of the plurality of branched channels linked to either end of said micro channel differs from the number of the plurality of branched channels linked to the other end of said micro channel.

5. A microchip for aqueous distribution as claimed in any one of claims 1, 2, 3, and 4 comprising further:
a flat surface plate disposed on the top of said substrate; and
said micro channel and said plurality of branched channels, which are defined on the top of said substrate being sealed with said surface plate.

6. A method of aqueous distribution wherein the microchip for aqueous distribution as claimed in any one of claims 1, 2, 3, and 4 is used, comprising the steps of:
supplying an aqueous solution in each phase, which is phase-separated to each of said branched channels; and
distributing micro-substances incorporated in said aque ous solution into each phase while transferring said aqueous solution in a phase-separated state inside said micro channel.

7. A method of aqueous distribution wherein the microchip for aqueous distribution as claimed in claim 5 is used, comprising the steps of:
supplying an aqueous solution in each phase, which is phase-separated to each of said branched channels; and
distributing micro-substances incorporated in said aque ous solution into each phase while transferring said aqueous solution in a phase-separated state inside said micro channel.

8. A method of aqueous distribution wherein the microchip for aqueous distribution as claimed in claim 6 is used, comprising:
transferring directions of phases adjacent to each other through their interface being in a parallel flow where said directions are the same with each other in case of transferring said aqueous solution in a phase-separated state inside said micro channel.

9. A method of aqueous distribution wherein the microchip for aqueous distribution as claimed in claim 7 is used, comprising:
transferring directions of phases adjacent to each other through their interface being in a parallel flow where said directions are the same with each other in case of transferring said aqueous solution in a phase-separated state inside said micro channel.

10. A method of aqueous distribution wherein the microchip for aqueous distribution as claimed in claim 6 is used, comprising:
transferring directions of phases adjacent to each other through their interface being in a counter flow where said directions are reverse of one another in case of transferring said aqueous solution in a phase-separated state inside said micro channel.

11. A method of aqueous distribution wherein the microchip for aqueous distribution as claimed in claim 7 is used, comprising:
transferring directions of phases adjacent to each other through their interface being in a counter flow where said directions are reverse of one another in case of transferring said aqueous solution in a phase-separated state inside said micro channel.

12. A method of aqueous distribution wherein the microchip for aqueous distribution as claimed in claim 6 is used, comprising:
existing mixedly a parallel flow where directions of phases adjacent to each other through their interface are the same with each other and a counter flow where transferring directions of phases adjacent to each other through their interface are reverse of one another in case of transferring sa id aqueous solution in a phase-separated state inside said micro channel.

13. A method of aqueous distribution wherein the microchip for aqueous distribution as claimed in claim 7 is used, comprising:
existing mixedly a parallel flow where directions of phases adjacent to each other through their interface are the same with each other and a counter flow where transferring directions of phases adjacent to each other through their interface are reverse of one another in case of transferring sa id aqueous solution in a phase-separated state inside said micro channel.
